# EUROPÄISCHE PATENTANMELDUNG

(11) **EP 2 073 592 A2**
(43) Veröffentlichungstag der Anmeldung: **24.06.2009**
(21) Anmeldenummer: 08019568.8
(22) Anmeldetag: 08.11.2008
(51) Int. Cl.: H04W 64/00, H04W 4/22

(54) **Verfahren zur Positionsbestimmung eines mobilen Funk-Kommunikationsendgeräts**

(30) Priorität: 18.12.2007 DE 102007061677
(71) Anmelder: Deutsches Zentrum für Luft- und Raumfahrt e.V. (DLR), 51147 Köln (DE)
(72) Erfinder: Mensing, Christian, 80469 München (DE); Dammann, Armin, Dr., 86899 Landsberg (DE); Fiebig, Uwe-Carsten, Dr., 82319 Starnberg (DE)
(74) Vertreter: von Kreisler Selting Werner

(57) **Zusammenfassung**

Zur Positionsbestimmung eines mobilen Funk-Kommunikationsendgeräts in einem terrestrischen, zellularen Funksystem wird von diesem an die umliegenden Basisstationen (B1, B2, B3) eine Anforderung mit der Zielsetzung gesendet, dass diese Basisstationen temporär die Sendesignalstruktur (S1, S2, S3) derart modifizieren, dass von dort Signale bzw. Signalkomponenten nach Art von zusätzlichen Pilotsymbolen (P) ausgesendet werden, die speziell für die Berechnung der Position von einem mobilen Kommunikationsendgerät geeignet sind. Es werden die Signallaufzeiten von verschiedenen, jeweils einer Funkzelle zugeteilten Basisstationen zu dem mobilen Kommunikationsendgerät gemessen, in welchem dann aus den gemessenen Laufzeiten seine Position berechnet wird. Zusätzlich wird die Sendeleistung der modifizierten, speziell zur Berechnung der Position im mobilen Kommunikationsendgerät verwendeten Signale bzw. Signalkomponenten in den betreffenden Basisstationen derart angepasst, dass diese Signale bzw. Signalkomponenten verschiedener Basisstationen am mobilen Kommunikationsendgerät ähnliche Pegel aufweisen.

Anwendung bei der Lokalisierung von mobilen Kommunikationsendgeräten, z.B. für Notrufzwecke, im Rahmen eines Mobilfunksystems der 4. Generation.

## Beschreibung

Die Erfindung betrifft ein Verfahren zur Positionsbestimmung eines mobilen Funk-Kommunikationsendgeräts in einem terrestrischen, zellularen Funksystem, wobei die Laufzeiten von speziell für die Berechnung der Position des Kommunikationsendgerätes nach Aufforderung von verschiedenen über ein Backbone-Netzwerk verknüpften, jeweils einer Funkzelle zugeteilten Basisstationen, die im Umkreis des augenblicklichen Ortes des mobilen Kommunikationsendgerätes liegen, temporär ausgesendeten modifizierten Signalen zu dem mobilen Kommunikationsendgerät gemessen werden und aus den gemessenen Laufzeiten die Position des mobilen Kommunikationsendgeräts berechnet wird.

Positionsermittlungen und Navigationsaufgaben werden heute zumeist mit satellitengestützten Systemen, insbesondere mit GPS und in Zukunft auch mit Galileo, durchgeführt. Diese Systeme sind weltweit verfügbar und ermöglichen eine genaue Ortung, sofern die Signale von mindestens vier Satelliten gleichzeitig und weitgehend echofrei empfangbar sind. Dies ist im Outdoor-Bereich oft der Fall. In Straßenschluchten und vor allem innerhalb von Gebäuden ist die Ortung mittels Satellitennavigationssystemen jedoch wegen starker Mehrwege-Ausbreitung und totalen Abschattungen von Satellitensignalen meist nur stark eingeschränkt und vielfach sogar überhaupt nicht möglich.

Die Nutzung von Mobilfunk-Signalen kann in solchen Situationen die Ortungsfunktionalität von satellitengestützten Systemen ersetzen oder ergänzen.

Es sind verschiedene Verfahren bekannt, die Mobilfunksignale zur Positionierung verwenden. Beim einfachsten Verfahren zur Positionsbestimmung wird als Standort des mobilen Kommunikationsendgeräts die jeweilige Basisstation angegeben, bei der sich das Endgerät angemeldet hat. Dieses Verfahren ist sehr ungenau, da sich gerade bei größeren Zellen der Aufenthaltsbereich über mehrere Kilometer erstrecken kann. Ein weiterer Nachteil dieses Verfahrens ist, dass die angegebene Basisstation nicht unbedingt die nächste ist. Falls nämlich das Funknetz der nächstliegenden Basisstation überlastet ist, wechselt das mobile Endgerät zur Basisstation der nächsten, nicht so stark belasteten Zelle.

Eine etwas verfeinerte Positionsbestimmung ist bei einer Aufteilung der Zellen beispielsweise in drei Winkelsektoren möglich. Hier sind an einer Basisstation drei in unterschiedliche Richtungen ausgerichtete Antennen angebracht, die mit unterschiedlichen Frequenzen arbeiten können. So kann zumindest schon der Sektor, aus dem das Signal kommt, ermittelt werden. Durch Signalstärkemessungen, möglicherweise auch kombiniert mit Zellsektorisierung, kann der ungefähre Abstand zur jeweiligen Basisstation bestimmt werden. Es bleibt jedoch immer noch ein relativ großer Bereich übrig, aus dem das Signal gesendet wird, was vor allem auf Geländeunebenheiten zurückzuführen ist.

Zur einigermaßen genauen Ortung mittels Mobilfunksignalen ist ebenso wie in satellitengestützten Systemen der gleichzeitige Empfang mehrerer Signale unterschiedlicher Basisstationen notwendig. Auf Grund der zellularen Struktur von Mobilfunksystemen ist dies prinzipiell möglich. Die geringe Entfernung zwischen dem mobilen Kommunikationsendgerät und der nächstgelegenen Basisstation garantiert in aller Regel auch einen guten Empfang innerhalb von Gebäuden. Damit sind wichtige Voraussetzungen zur Ortung mittels Mobilfunksignalen gegeben.

In den zellularen Systemen GSM und UMTS sind verschiedene Ortungsverfahren spezifiziert, die im Wesentlichen auf der Messung von Signallaufzeiten und Empfangspegeln beruhen. In diesem Zusammenhang wird insbesondere auf die Artikel von Suvi Ahonen, Pekka Eskelinen: "Mobile terminal location for UMTS in IEEE Aerospace and Electronic Systems Magazine", 18(2), Seiten 23-27, Februar 2003, und von Yilin Zhao: "Standardization of mobile phone positioning for 3g systems", IEEE Communications Magazine, 40(7), Seiten 108-116, Juli 2002, hingewiesen.

Bei genaueren laufzeitbasierten Positionsbestimmungsverfahren werden möglichst mindestens drei Basisstationen zur Messung herangezogen. Hierbei werden die Laufzeiten vom mobilen Kommunikationsendgerät zu den Basisstationen benötigt, um die Position des Endgeräts zu berechnen. Diese ergibt sich aus dem Schnittpunkt von drei Hyperbeln. Beim sogenannten TDoA(Time Difference of Arrival)-Verfahren, das z.B. in dem Aufsatz von Guolin Sun, Jie Chen, Wei Guo und K.J. Ray Liu: "Signal processing techniques in network-aided positioning", IEEE Signal Processing Magazine, 22(4), Seiten 12-23, Juli 2005, beschrieben ist, sendet das mobile Endgerät an mehrere Basisstationen gleichzeitig ein Signal.

Der Zeitstempel bei Ankunft des Signals wird von jeder Basisstation gespeichert und kann dort mit den anderen Zeitstempeln verglichen werden, so dass die Position des mobilen Endgeräts nun berechnet werden kann. Bei einer verbesserten Positionierungstechnik senden die Basisstationen ein Signal an das mobile Kommunikationsendgerät aus. Die Position wird nun wie beim TDoA-Verfahren errechnet mit dem Unterschied dass die Berechnung nicht die Basisstationen übernehmen, sondern das mobile Endgerät selbst.

Aus US 7 116 990 B2 ist ein Verfahren bekannt, bei dem seitens des mobilen Endgeräts eine Positionierungsanforderung zusammen mit einer Qualitätsanforderung an das Mobilfunknetzwerk gesendet wird. Das Netzwerk liefert die gewünschte Positionslösung in der geforderten Qualitätsstufe zurück. Dabei kommen je nach Qualitätsanforderung verschiedene Algorithmen in verschiedenen Netzwerkkomponenten zum Einsatz.

In US 6 901 264 B2 wird ein System zur Verfolgung ("Tracking") der Positionierungsdaten sehr vieler mobiler Endgeräte vorgeschlagen. Dabei liefern die mobilen Endgeräte ihre Positionsinformation auf Anforderung des Systems bzw. des Netzwerks.

Aus WO 2007/013850 A2 ist ein Verfahren zur Positionsbestimmung eines mobilen Funk-Kommunikationsendgeräts in einem terrestrischen, zellularen Funksystem bekannt. Hierbei werden die Laufzeiten von speziell für die Berechnung der Position des Kommunikationsendgerätes nach Aufforderung von verschiedenen über ein Backbone-Netzwerk verknüpften, jeweils einer Funkzelle zugeteilten Basisstationen, die im Umkreis des augenblicklichen Ortes des mobilen Kommunikationsendgerätes liegen, temporär ausgesendeten modifizierten Signalen zu dem mobilen Kommunikationsendgerät gemessen. Aus den gemessenen Laufzeiten wird die Position des mobilen Kommunikationsendgeräts berechnet. Die von den Basisstationen temporär ausgesendeten, zur Positionsbestimmung eines mobilen Teilnehmergeräts modifizierten Signale sind Pilotsignale in von einem besonderen Scheduler vorgeschlagenen, erlaubten Frequenzlagen (tones) und/oder Zeitschlitzen (time slots).

Da die Signalstrukturen der heutigen Mobilfunksysteme nicht hinsichtlich der Positionierungsgenauigkeit entworfen oder gar optimiert sind und die bekannten Algorithmen und Verfahren, wie z.B. TDoA, also diese hinsichtlich der Positionierung sehr suboptimalen Signale zur Berechnung der Position des mobilen Endgeräts nutzen, ergeben sich in vielen Fällen zu ungenaue Positionsresultate.

Für die vierte (4.) Generation Mobilfunk steht eine Standardisierung noch bevor.

Aufgabe der vorliegenden Erfindung ist es, die Position eines mobilen Funk-Kommunikationsendgeräts in einem terrestrischen, zellularen Mobilfunksystem unter Einsatz von Messungen der Signallaufzeiten zwischen diesem mobilen Endgerät und unterschiedlichen Basisstationen genauer als bei den bisher bekannt gewordenen Ortsbestimmungsverfahren in Mobilfunknetzen zu lokalisieren.

Gemäß der vorliegenden Erfindung, die sich auf ein Verfahren der eingangs genannten Art bezieht, wird diese Aufgabe in vorteilhafter Weise dadurch gelöst, dass zunächst das mobile Kommunikationsendgerät eine Aufforderung zur Modifizierung der Signalstruktur an seine momentan zugeordnete Basisstation sendet, dass diese Basisstation dann temporär in einer modifizierten Signalstruktur zusätzliche Pilotsymbole aussendet, die speziell für die Berechnung der Position von einem mobilen Kommunikationsendgerät geeignet sind, und dass diese Basisstation darüber hinaus über das Backbone-Netzwerk auch die Übertragung modifizierter Signalstrukturen mit zusätzlichen Pilotsymbolen von benachbarten Basisstationen mit angepasster höherer Leistung veranlasst oder koordiniert, wobei die Sendeleistung der durch Pilotsymbole modifizierten Signale bzw. Signalkomponenten in den betreffenden Basisstationen derart angepasst wird, dass diese Signale bzw. Signalkomponenten verschiedener Basisstationen am mobilen Kommunikationsendgerät ähnliche Pegel aufweisen.

Der Erfindung liegt die Idee zu Grunde, dass für die Durchführung der Ortung eines ein mobiles Kommunikationsendgerät mit sich führenden Nutzers eine entsprechende Anforderung an die umliegenden Basisstationen gesendet wird, mit der Zielsetzung, dass diese Basisstationen kurzfristig die zur Positionierung verwendeten Signale oder Komponenten davon derart modifizieren, dass am mobilen Endgerät genügend zur Positionierung geeignete Signalkomponenten von jeder Basisstation in ausreichender Qualität empfangen werden.

In vorteilhafter Weise wird darüber hinaus die Sendeleistung der durch Pilotsymbole modifizierten, speziell zur Berechnung der Position im mobilen Kommunikationsendgerät verwendeten Signale bzw. Signalkomponenten in den betreffenden Basisstationen derart angepasst, dass diese Signale bzw. Signalkomponenten verschiedener Basisstationen am mobilen Kommunikationsendgerät ähnliche Pegel aufweisen.

Dieser Vorgang wird nachfolgend auch als "Pilots on Demand" bezeichnet. Der Begriff leitet sich von der Tatsache ab, dass die Ortung im Wesentlichen mit Hilfe von Signalkomponenten durchgeführt wird, deren Struktur am Empfänger bekannt ist. In der Kommunikationstechnik werden solche Signalkomponenten als Pilotsymbole oder kürzer als Piloten (englisch: "pilots") bezeichnet und üblicherweise zur Synchronisation und Kanalschätzung verwendet. Sowohl die Anzahl solcher Piloten als auch deren Sendeleistung können auf Anforderung (englisch: "on demand") von den umliegenden Basisstationen geeignet modifiziert werden.

Beim Verfahren nach der vorliegenden Erfindung existieren im Gegensatz zum bisher bekannt gewordenen Stand der Technik Systemmechanismen, die eine dynamische Änderung der Signalstruktur zur temporären Erhöhung der Positionierungsgenauigkeit eines mobilen Endgeräts ermöglichen. Bekannte Algorithmen und Verfahren, wie z.B. TDoA, nutzen hinsichtlich der Positionierung nur sehr suboptimale Signale zur Berechnung der Position des mobilen Kommunikationsendgeräts, was in vielen Fällen zu ziemlich ungenauen Ergebnissen führt.

Das Verfahren zur Verbesserung der Positionierungsgenauigkeit nach der vorliegenden Erfindung zeichnet sich demnach durch eine temporäre Änderung der Signalstruktur eines Mobilfunksystems auf Anforderung aus. Die Anzahl der Piloten kann temporär erhöht werden, um einem mobilen Kommunikationsendgerät zur Positionierung geeignete Signale zur Verfügung zu stellen. Es wird eine dynamische Änderung der Signalstruktur auf individuelle Anforderung erreicht.

In Ergänzung hierzu kann die Sendeleistung der zur Positionierung verwendeten Signale bzw. Signalkomponenten derart angepasst werden, dass diese Signale bzw. Signalkomponenten verschiedener Basisstationen am mobilen Kommunikationsendgerät ähnliche Pegel aufweisen. Eine Leistungsregelung ("Power Adaption") zur Optimierung von z.B. Interferenz, Batterielaufzeit, Durchsatz, etc. ist für Mobilfunksysteme innerhalb einer Mobilfunkzelle zwar bekannt. Die Anwendung einer Leistungsregelung, um die Signale verschiedener Basisstationen hinsichtlich ihrer Leistungspegel ins Gleichgewicht zu bringen, ist hingegen neu.

Da die Entfernungen zwischen einem mobilen Kommunikationsendgerät und den umliegenden Basisstationen nämlich meist stark unterschiedlich sind, ist in der Regel auch die vom mobilen Endgerät erhaltene Empfangsleistung der Signale dieser Basisstationen stark unterschiedlich. Das liegt daran, dass insbesondere die Signalisierungskanäle von den Basisstationen oft mit gleicher Sendeleistung abgestrahlt werden. Die Ortung mit Hilfe der Signale mehrerer Basisstationen würde somit ohne die angesprochene Leistungsangleichungsregelung wegen der dann unterschiedlichen Empfangspegel erschwert werden.

Das Verfahren zur Positionsbestimmung nach der vorliegenden Erfindung kann in einer solchen Weise betrieben werden, dass zunächst das mobile Kommunikationsendgerät eine Anforderung zur Modifizierung der Signalstruktur an seine momentan zugeordnete Basisstation sendet, dass diese Basisstation dann temporär in einer modifizierten Signalstruktur zusätzliche Pilotsymbole aussendet und dass diese Basisstation darüber hinaus über das Backbone-Netzwerk auch die Übertragung modifizierter Signalstrukturen mit zusätzlichen Pilotsymbolen von benachbarten Basisstationen mit angepasster höherer Leistung veranlasst oder koordiniert.

Beruht das zellulare Funksystem auf dem Mehrträger-Modulationsverfahren OFDM (Orthogonal Frequency Division Multiplexing), so können zur Unterscheidung der zusätzlichen Pilotsignale verschiedener Basisstationen diese vorteilhaft in verschiedenen Trägern und/oder in verschiedenen Zeitinstanzen eines OFDM-Rahmens übertragen werden.

Eine weitere Trennung der zusätzlichen Pilotsignale verschiedener Basisstationen kann in vorteilhafter Weise durch CDMA(Code Division Multiple Access)-Maßnahmen vorgenommen werden.

Bei Betätigung eines Notrufs über das mobile Kommunikationsendgerät kann bei Anwendung des Verfahrens nach der vorliegenden Erfindung an die umliegenden Basisstationen auch der Anforderungsvorgang zur Modifizierung der Signalstruktur automatisch gestartet werden, der die Positionsbestimmung des mobilen Kommunikationsendgeräts ermöglicht. Die berechnete Ortsinformation wird anschließend in die Notrufmitteilung des mobilen Kommunikationsendgeräts eingebunden.

In den beigefügten Ansprüchen 2 bis 7, die sich mittelbar oder unmittelbar auf den Patentanspruch 1 rückbeziehen, sind vorteilhafte und zweckmäßige Weiterbildungen der Erfindung angegeben.

Eine vorteilhafte Verwendungsmöglichkeit des erfindungsgemäß ausgelegten Verfahrens besteht, wie bereits vorher angesprochen, bei Notrufen, bei denen in aller Regel eine Ortsinformation des betroffenen Nutzers übertragen werden muss. Befindet sich der Nutzer innerhalb von Gebäuden, ist eine Ortung mittels satellitengestützter Systeme oft nicht möglich. Mit der durch die vorliegende Erfindung vorgeschlagenen Lösung kann jedoch eine genaue Ortung auch dort, aber auch andernorts vorgenommen werden. Bei Betätigung des Notrufs wird automatisch auch der Vorgang "Pilots on Demand" gestartet, der eine bessere Ortung des mobilen Endgeräts ermöglicht. Die Ortsinformation kann anschließend in die Notrufmitteilung eingebunden werden.

Die Erfindung wird nachfolgend unter Bezugnahme auf eine beiliegende Figur im Einzelnen erläutert.

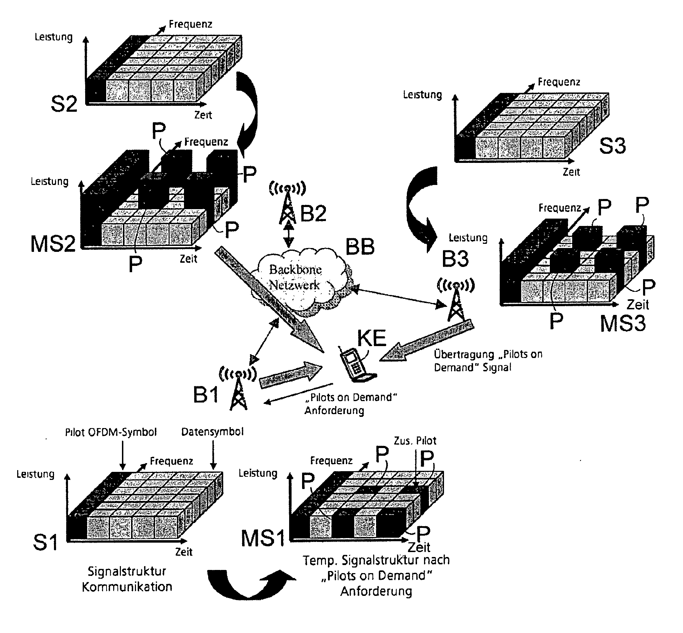

Die Figur zeigt beispielhaft die Anwendung des Verfahrens nach der vorliegenden Erfindung in einem zellularen Mobilfunksystem, basierend auf dem Mehrträgermodulationsverfahren OFDM. Ein mobiles Kommunikationsendgerät KE sendet eine "Pilots on Demand"-Anforderung an seine Basisstation B1, die für die normale Kommunikation Signale mit einer Signalstruktur S1 aussendet. Diese Basisstation B1 sendet nach der erwähnten Anforderung temporär in einer modifizierten Signalstruktur MS1 zusätzliche Pilotsymbole P.

Über das Backbone-Netzwerk BB veranlasst oder koordiniert diese Basisstation B1 auch die Übertragung zusätzlicher Pilotsymbole P von benachbarten Basisstationen B2 und B3 mit angepasster höherer Leistung. In der Basisstation B2 wird nach dieser Veranlassung und Koordinierung anstelle der normalen Signalstruktur S2 temporär eine modifizierte Signalstruktur MS2 mit Piloten P und in der Basisstation B3 anstelle der normalen Signalstruktur S3 eine modifizierte Signalstruktur MS3 ebenfalls mit Piloten P ausgesendet.

Die von den drei Basisstationen B1, B2 und B3 ausgesandten "Pilots on Demand"-Signale mit den Strukturen MS1, MS2 und MS3 werden im mobilen Kommunikationsendgerät mit etwa gleichem Pegel empfangen und dort einer Auswertung unterzogen, wobei aus den Ankunftszeitdifferenzen dieser Signale mit den Piloten P die augenblickliche Position des Kommunikationsendgeräts KE berechnet wird.

Zur Unterscheidung der zusätzlichen, in den abgebildeten Signalstrukturen MS1, MS2 und MS3 schwarz dargestellten Piloten P der verschiedenen Basisstationen B1, B2 und B3 können diese in verschiedenen Trägern und/oder in verschiedenen Zeitinstanzen eines OFDM-Rahmens übertragen werden. Eine weitere Trennung wäre durch CDMA möglich. Dies könnte beispielsweise zur Trennung sich überlagernder Pilotsymbole verwendet werden. Dies ist z.B. dann der Fall, wenn jede Basisstation zur selben Zeit ganze OFDM-Symbole als Piloten sendet.

### Bezugszeichenliste

- B1, B2, B3: Basisstationen
- BB: Backbone-Netzwerk
- KE: Mobiles Kommunikationsendgerät
- MS1, MS2, MS3: Modifizierte Signalstruktur
- P: Pilotsymbol, Pilot
- S1, S2, S3: Normale Signalstruktur

## Patentansprüche

1. Verfahren zur Positionsbestimmung eines mobilen Funk-Kommunikationsendgeräts in einem terrestrischen, zellularen Funksystem, wobei die Laufzeiten von speziell für die Berechnung der Position des Kommunikationsendgerätes nach Aufforderung von verschiedenen über ein Backbone-Netzwerk verknüpften, jeweils einer Funkzelle zugeteilten Basisstationen, die im Umkreis des augenblicklichen Ortes des mobilen Kommunikationsendgerätes liegen, temporär ausgesendeten modifizierten Signalen zu dem mobilen Kommunikationsendgerät gemessen werden und aus den gemessenen Laufzeiten die Position des mobilen Kommunikationsendgeräts berechnet wird, **dadurch gekennzeichnet, dass** zunächst das mobile Kommunikationsendgerät (KE) eine Aufforderung zur Modifizierung der Signalstruktur (S1) an seine momentan zugeordnete Basisstation (B1) sendet, dass diese Basisstation dann temporär in einer modifizierten Signalstruktur (MS1) zusätzliche Pilotsymbole (P) aussendet, die speziell für die Berechnung der Position von einem mobilen Kommunikationsendgerät (KE) geeignet sind, und dass diese Basisstation darüber hinaus über das Backbone-Netzwerk (BB) auch die Übertragung modifizierter Signalstrukturen (MS2, MS3) mit zusätzlichen Pilotsymbolen (P) von benachbarten Basisstationen (B2, B3) mit angepasster höherer Leistung veranlasst oder koordiniert, wobei die Sendeleistung der durch Pilotsymbole (P) modifizierten Signale bzw. Signalkomponenten in den betreffenden Basisstationen (B1, B2, B3) derart angepasst wird, dass diese Signale bzw. Signalkomponenten verschiedener Basisstationen am mobilen Kommunikationsendgerät ähnliche Pegel aufweisen.

2. Verfahren nach Anspruch 1, **dadurch gekennzeichnet, dass** das zellulare Funksystem auf dem Mehrträger-Modulationsverfahren OFDM (Orthogonal Frequency Division Multiplexing) beruht.

3. Verfahren nach Anspruch 2, **dadurch gekennzeichnet, dass** zur Unterscheidung der zusätzlichen Pilotsignale (P) verschiedener Basisstationen (B1, B2, B3) diese in verschiedenen Trägern und/oder in verschiedenen Zeitinstanzen eines OFDM-Rahmens übertragen werden.

4. Verfahren nach Anspruch 3, **dadurch gekennzeichnet, dass** eine weitere Trennung der zusätzlichen Pilotsignale verschiedener Basisstationen (B1, B2, B3) durch CDMA-Maßnahmen vorgenommen wird.

5. Verfahren nach einem der vorhergehenden Ansprüche, **dadurch gekennzeichnet, dass** bei Betätigung eines Notrufs über das mobile Kommunikationsendgerät (KE) automatisch an die umliegenden Basisstationen (B1, B2, B3) auch der Anforderungsvorgang zur Modifizierung der Signalstruktur gestartet wird, der die Positionsbestimmung des mobilen Kommunikationsendgeräts ermöglicht, und dass die berechnete Ortsinformation anschließend in die Notrufmitteilung des mobilen Kommunikationsendgeräts eingebunden wird.
